# EUROPEAN PATENT SPECIFICATION

(11) **EP 3 283 304 B1**
(45) Date of publication and mention of the grant of the patent: **25.08.2021**
(21) Application number: 15723760.3
(22) Date of filing: 16.04.2015
(51) Int. Cl.: B60B 3/16, F16B 37/14, F16B 41/00

(54) **ANTITHEFT LOCKING DEVICE FOR VEHICLE WHEELS**
DIEBSTAHLSICHERUNGSVORRICHTUNG FÜR FAHRZEUGRÄDER
DISPOSITIF DE VERROUILLAGE ANTIVOL POUR ROUES DE VÉHICULE

(43) Date of publication of application: 21.02.2018
(73) Proprietor: Groppo, Lazzaro, 12040 Sanfre' (CN) (IT); Groppo, Matteo, 12040 Sanfre (CN) (IT)
(72) Inventor: GROPPO, Lazzaro, I-12040 Sanfre' (CN) (IT)
(74) Representative: Robba, Pierpaolo
(86) International application number: PCT/IB2015/052777
(87) International publication number: WO 2016/166575

(56) References cited:
- EP-A1- 2 196 686
- EP-A1- 2 228 176
- EP-A1- 2 816 244
- US-A1- 2014 363 255

## Description

### Technical Field

The present invention relates to an antitheft locking device for vehicle wheels. More particularly, the invention relates to an antitheft locking device that is made as a threaded bolt or nut, for fixing a wheel to a vehicle hub. The invention is capable of being applied in particular, though not exclusively, to motor vehicle wheels of special aesthetic and functional value such as for instance those having light alloy rims or chrome-plated rims.

### Prior Art

Antitheft locking devices made as nuts or bolts and having an idly rotatable bushing are known. The bushing prevents the device from being rotated by means of conventional tools such as fixed or adjustable wrenches. According to prior art, in order to screw or unscrew such a device provided with idly rotatable bushing it is necessary to use an appropriate antitheft wrench. The wrench has a shape suitable for being rotated by means of a conventional tool such as a fixed or adjustable wrench, and engages into the head of the antitheft nut or bolt with a specific coupling. EP 2 196 686 describes an example of an antitheft device of the aforesaid kind.

Known antitheft devices having an idly rotatable bushing comprise a one-piece body having a threaded male or female portion for engagement into a threaded bore or threaded stud, respectively, of the wheel hub. On the side of the device body opposite to the threaded portion there is provided an axially extending cylindrical portion. On the cylindrical portion there is mounted a bushing. The bushing is mounted on the cylindrical portion with a coupling that allows rotation of the bushing relative to the body of the antitheft device.

Still according to prior art, the rotatable bushing has a circular section and is further made of a particularly strong material for withstanding burglary attempts. Also the coupling between the bushing and the cylindrical portion is made so as to be capable of withstanding burglary attempts and usually comprises an elastic ring which is received partially in an annular groove formed inside the bushing and partially in an annular groove formed around the cylindrical portion.

A vehicle wheel hub usually comprises a plurality of locking nuts or bolts, typically four or five. However, antitheft locking devices, irrespective of how strong they can be, do not always have the same locking capacity as conventional nuts or bolts. Furthermore, antitheft locking devices are more expensive than conventional nuts or bolts. For these reasons, in a wheel hub only one conventional nut or bolt is substituted by an antitheft device. The presence of the rotatable bushing, however, makes an aesthetic difference between the antitheft locking device and the conventional nuts or bolts in the hub. A first problem of the prior art is therefore how to make aesthetically uniform the group of locking devices, be they of the conventional kind or of the antitheft kind, in a conventional wheel hub of a vehicle. The aforesaid problem is particularly felt with wheels provided with valuable rims such as those made of light alloys or chrome-plated steel. The object of the present invention is to solve this problem by providing an antitheft locking device having an idly rotatable bushing that is substantially indistinguishable from the other nuts or bolts mounted on the same wheel hub.

As anticipated above, another problem of the antitheft devices of the prior art consists in how to make an aesthetically appealing bushing that is strong enough to withstand burglary efforts. It is a further object of the present invention to solve this problem by providing an antitheft locking device with rotatable bushing that is particularly resistant against burglary attempts.

These and other objects are achieved by the antitheft locking device for vehicle wheels as claimed in the appended claims.

### Summary of the Invention

The antitheft locking device for vehicle wheels according to the invention comprises a one-piece body. The device body is provided, at a first end, with a threaded cylindrical portion. The thread can be a male thread or a female thread depending on whether the device is made as a nut or bolt, respectively. The device body is further provided, at a second end opposite to the first end, with an axially extending cylindrical projection. The cylindrical projection is coaxial to the cylindrical threaded portion. The cylindrical projection has a circular cross section. In addition, the cylindrical projection is surrounded by an idly rotatable bushing. The bushing is firmly associated to the device body. The device body further comprises a portion extending radially in a plane substantially perpendicular to the longitudinal axis of the cylindrical body. The radial portion is provided with engagement means for a complementary wrench by means of which the device can be rotated. The engagement means preferably comprise a continuous groove. In other embodiments the groove may be interrupted. Its shape preferably follows an irregular path varying from one device to another or from a production batch to another, for preventing or reducing the probability that devices mounted on different vehicles can be rotated with the same wrench.

According to the invention, the bushing comprises a hollow body having a circular inner cross section capable of rotatably engaging on said cylindrical projection. Still according to the invention, the hollow body further comprises a non-circular outer section. The outer section of the hollow body can reproduce the desired aesthetic appearance, in particular the hexagonal shape of a conventional nut or bolt. In a first embodiment of the invention, the hollow body is a one-piece body, i.e. it is made as a single piece. Moreover, the outer surface of the hollow body is preferably chrome-plated or varnished in order to reproduce the appearance of the other standard locking devices mounted in the same wheel hub. In other embodiments, the hollow body consists of at least two parts. The two parts are firmly engaged with each other, preferably by interference. The outer part is blind and the inner part may be either blind or open at its both ends. In an embodiment variant, an adhesive suitable for the purpose may be provided between the two parts of the hollow body. Still according to the invention, the inner part of the hollow body is made of high resistant steel and the outer part is made of chrome-plated steel or stainless steel of varnished steel or plastics. In addition, preferably, the thickness of the wall of the inner part of the hollow body is significantly greater than the thickness of the wall of the outer portion. Even more preferably, the ratio between the thickness of the wall of the inner part and the thickness of the wall of the outer part is about 10:1.

Advantageously, according to the invention, the outer cross section of the hollow body can be chosen among any non-circular shapes, either regular or irregular. Preferably said section is chosen among hexagonal, square, star-like, trapezoidal, triangular sections.

In accordance with a particular embodiment of the invention, the radial portion provided with engagement means is advantageously covered with a circular ferrule. The ferrule may comprise a thin metal washer and allows to confer the desired aesthetic appearance also to the radial portion of the antitheft device. When the engagement means comprise a continuous annual groove, the ferrule preferably has a "U"-shaped cross section and a central portion reproducing the shape of the groove. In this case the ferrule is positioned on the radial portion and is fitted into the groove. An adhesive may also be provided in order to improve fixing. When the engagement means comprise an interrupted annular groove, the ferrule comprises a pair of concentric circular crowns connected to each other by means of radial connecting elements arranged at the interruptions of the groove. Advantageously, according to this particular embodiment of the invention it is possible to confer the desired aesthetic appearance also to the radial portion of the device. The ferrule may therefore be advantageously chrome-plated, varnished or made of plastics.

### Brief Description of the Drawings

Some preferred embodiments of the invention will be described by way of nonlimiting examples with reference to the attached drawings, in which:
- Fig.1 is a longitudinal section of a first embodiment of the device according to the invention made as a bolt;
- Fig.2 is a cross section of the bushing of the device of Fig. 1;
- Fig.3 is a longitudinal section of a first embodiment of the device according to the invention made as a nut;
- Fig.4 is a cross section of the bushing of the device of Fig.3;
- Fig.5 is a longitudinal section of a second embodiment of the device according to the invention made as a bolt;
- Fig.6 is a cross section of the bushing of the device of Fig.5;
- Fig.7 is a longitudinal section of a second embodiment of the device according to the invention made as a nut;
- Fig.8 is a cross section of the bushing of the device of Fig.7;
- Fig.9 is a longitudinal section of the antitheft wrench;
- Fig. 10 is a top plan view of the wrench of Fig.9;
- Fig. 11 is a cross section of the guiding portion in the first embodiment of the invention with hexagonal bushing;
- Fig. 12 is a cross section of the guiding portion in the second embodiment with hexagonal bushing;
- Fig. 13 is a longitudinal section of a device according to the invention provided with covering ferrule for the radial portion;
- Fig. 14 is a plan view of the covering ferrule in a first variant;
- Fig. 15 is a plan view of the covering ferrule in a second variant.

The same reference numerals have been used in all the Figures for identifying equal or functionally equivalent components.

### Description of Some Preferred Embodiments of the Invention

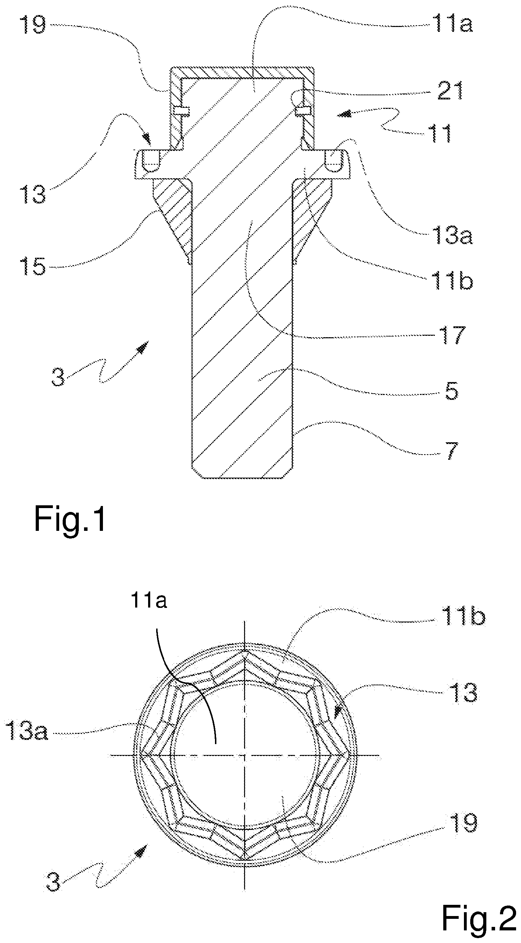

With reference Figs. 1 and 2 there is illustrated an antitheft locking device 3 for vehicle wheels, made as a bolt in accordance with a first embodiment of the invention. The device 3 comprises a cylindrical body 17 made as one-piece in which a cylindrical portion 5 having a male thread 7 is defined. The portion 5 defines a threaded shaft and is provided at a first end of the body 17. The body 17 of the device 3 is further provided, at its second end opposite to the first end, with a cylindrical projection 11a extending axially within the body 17. The cylindrical projection 11a is coaxial to the cylindrical threaded portion 5. The cylindrical projection 11a further has a circular cross section. The cylindrical projection 11a is surrounded by a blind idly rotatable bushing 19. The bushing 19 is firmly associated to the body 17 of the device 3 by means of an elastic ring 21. The cylindrical body 17 further comprises a portion 11b extending radially in a plane substantially perpendicular to the longitudinal axis of the cylindrical body 17. The radial portion 11b is provided with engagement means 13 for a complementary wrench, as will become apparent from the following description. In the embodiment shown, the engagement means 13 comprise an annular groove 13a. The groove 13a can be continuous or interrupted.

Advantageously, according to this embodiment, the bushing 19 comprises a hollow body made as a single piece having a circular inner cross section capable of rotatably engaging on said cylindrical projection 11a by means of the ring 21. Still according to the invention, the hollow body of the bushing 19 comprises a non-circular outer section. The outer section of the hollow body can reproduce the desired aesthetic appearance, in particular the hexagonal shape of a conventional nut or bolt.

The portion 5 is suitable for engaging into a threaded bore of a motor vehicle wheel hub for locking a corresponding wheel rim. For this purpose a circumferential abutment portion 15 is provided at the base of the portion 5. Advantageously, according to the invention, the body of the bushing 19 is made with a large thickness in order to withstand burglary attempts. In addition, the outer surface, for instance hexagonal, of the bushing 19 is preferably chrome-plated or the bushing is made of stainless steel for meeting aesthetic requirements.

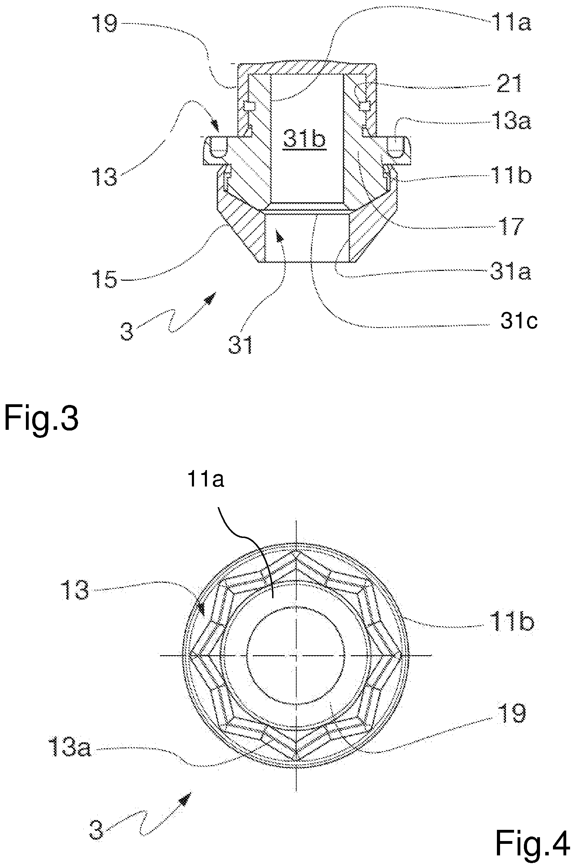

Referring to Figs. 3 and 4, there is shown the first embodiment of the invention when the device 3 is made as a nut. In accordance with this embodiment the device 3 comprises a cylindrical female recess 31b having an opening 31 and a thread 31a. The recess 31b is defined at a first end of the body 17. In the embodiment shown, the recess 31b passes through the whole body 17. In other embodiments it will be possible to provide said recess 31b as a blind recess. The recess 31b comprises an inner abutment shoulder 31c for the head of the stud on which the nut is engaged.

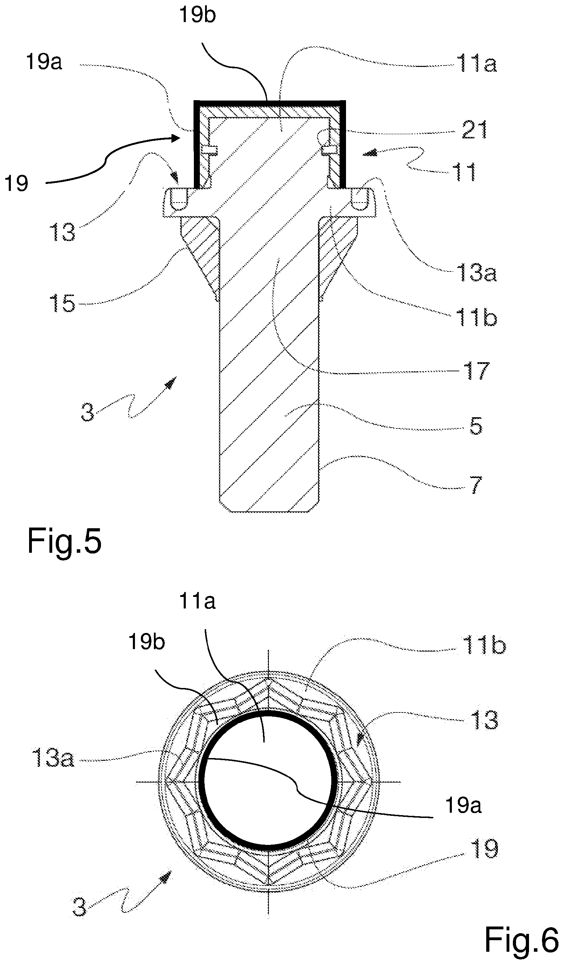

Referring to Figs. 5 and 6 the device 3 in a second embodiment of the invention is made a s bolt. According to this embodiment, the bushing 19 comprises a hollow body consisting of two respectively inner and outer parts 19a,19b. The two parts of the body of the bushing 19 are firmly engaged with each other by interference. In an embodiment variant, the two parts 19a, 19b of the hollow body are connected to each other by means of an adhesive suitable for this purpose. Still according to the invention, the inner part 19a of the hollow body is made of high resistant steel and the outer part 19b is made of chrome-plated steel or stainless steel or varnished steel or plastics. In addition, preferably, the thickness of the wall of the inner part 19a of the hollow body is significantly greater than the thickness of the wall of the outer part 19b. More preferably, the ratio between the thickness of the wall of the inner part 19a and the thickness of the wall of the outer part 19b is about 10:1.

Advantageously, according to the invention, the outer cross section of the outer part 19b can be chosen among any non-circular shapes, either regular or irregular. Preferably said section is chosen among hexagonal, square, star-like, trapezoidal, triangular sections.

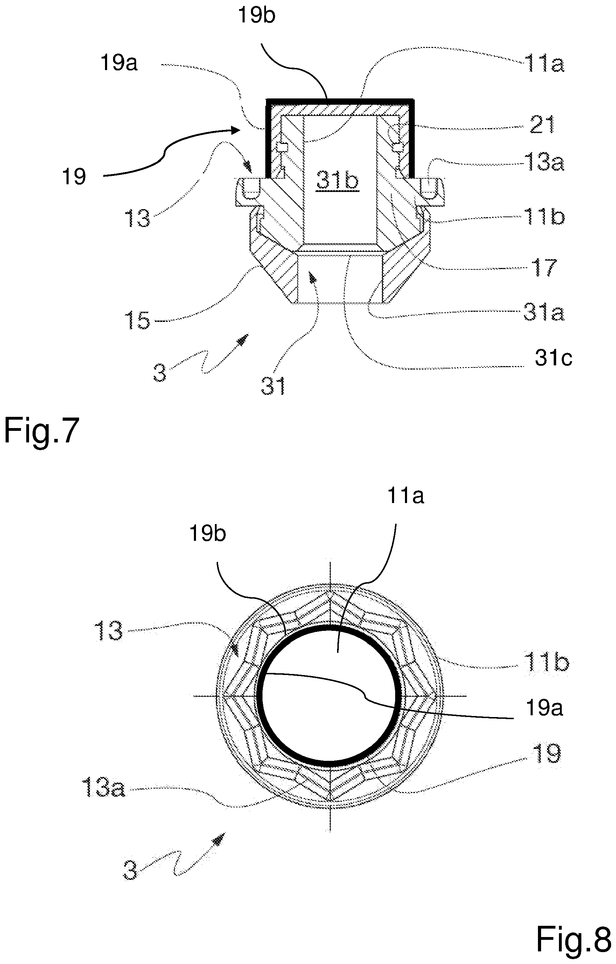

Referring to Figs. 7 and 8 there is shown the second embodiment of the invention when the device 3 is made as a nut. According to this embodiment, the device 3 comprises a cylindrical female recess 31b having an opening 31 and a thread 31a. The recess 31b is provided at a first end of the body 17. In the embodiment shown, the recess 31b passes through the whole body 17. In other embodiments it will be possible to provide said recess 31b as a blind recess.

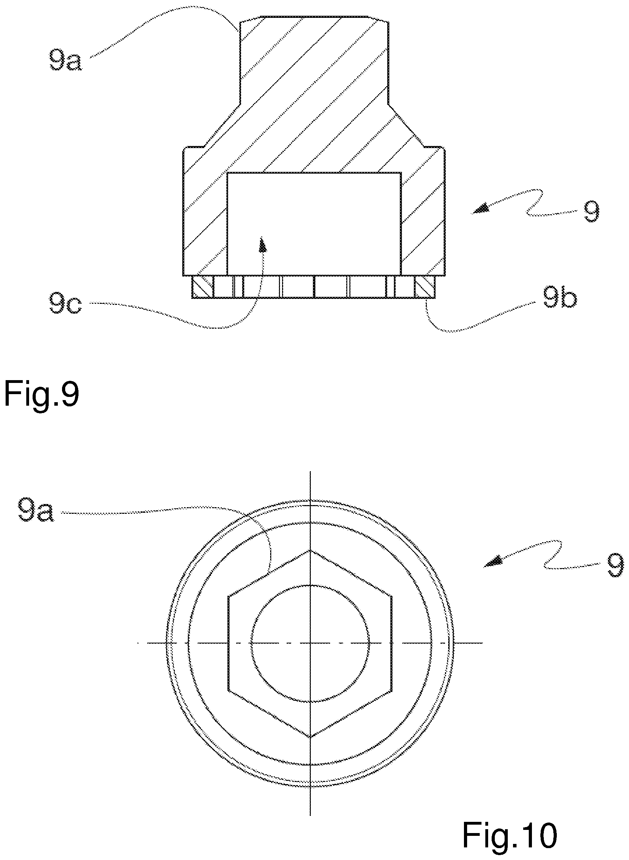

Referring to Figs. 9 and 10 there is illustrated a complementary wrench 9 capable of engaging into the groove 13a. With the wrench 9 it is possible to rotate the device 3 according to the several embodiments described. According to the prior art, said wrench 9 comprises a hexagonal axial extension 9a into which a fixed wrench of the standard type can engage. In addition, the wrench 9 comprises an axial extension 9b having a shape complementary to the groove 13a. Advantageously, according to the invention, the bushing 19 defines a guiding portion of the device 3 for guiding the wrench 9 in its configuration of engagement with the extension 9b into the groove 13a. For this purpose the wrench 9 comprises a cylindrical recess 9c in which the bushing 19 is received. The cross section of the recess 9c is advantageously made so as to allow insertion of the wrench onto the bushing 19 with minimal interference. This measure facilitates engagement of the wrench 9. Furthermore, the bushing 19, being rotatable, allows the wrench to be brought in the correct angular position for engagement between the extension 9b and the groove 9a. Thus, the cross section of the recess 9c can be complementary to the outer cross section of the bushing 19, for instance hexagonal. As an alternative, the cross section of the recess 9c can be circular and tangent to the edges of the outer cross section of the bushing 19. In the latter case, the rotation of the wrench 9 relative to the device 3 for proper centering of the axial extension 9a into the groove 13a can take place owing to rotation of the bushing 19 or owing to rotation of the wrench 9 relative to the bushing 19.

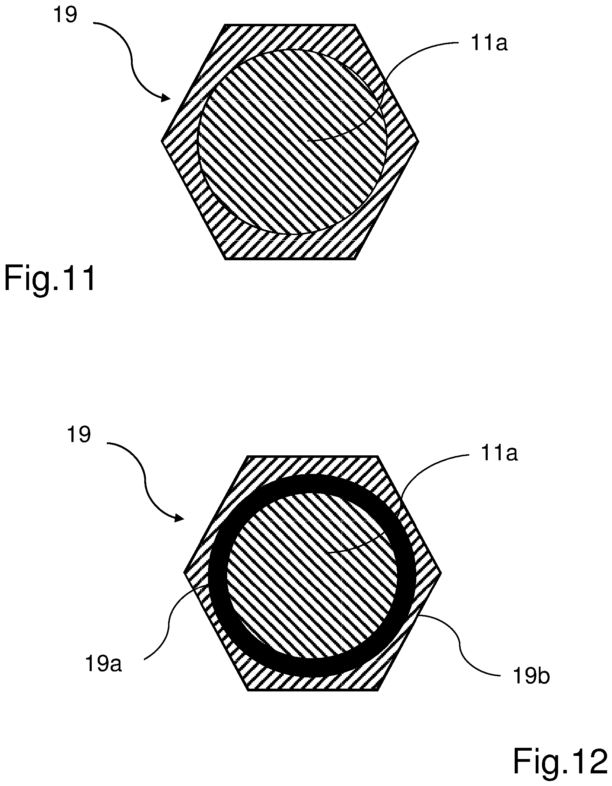

Referring to Fig. 11 an embodiment of the one-piece bushing 19, i.e. made as a single body, is illustrated in cross section. In this embodiment the bushing 19 comprises a circular inner cross section and a hexagonal outer cross section.

Referring to Fig. 12 there is illustrated an embodiment of the bushing 19 consisting of two parts 19a,19b firmly engaged with each other. In this embodiment the bushing 19 comprises a first inner part 19a with circular inner cross section and also with circular outer cross section and a second outer part 19b with circular inner cross section for engaging by interference on the first inner part 19a and with hexagonal outer cross section for meeting aesthetic requirements. An adhesive may be provided between the parts 19a, 19b in order to obtain proper fixing.

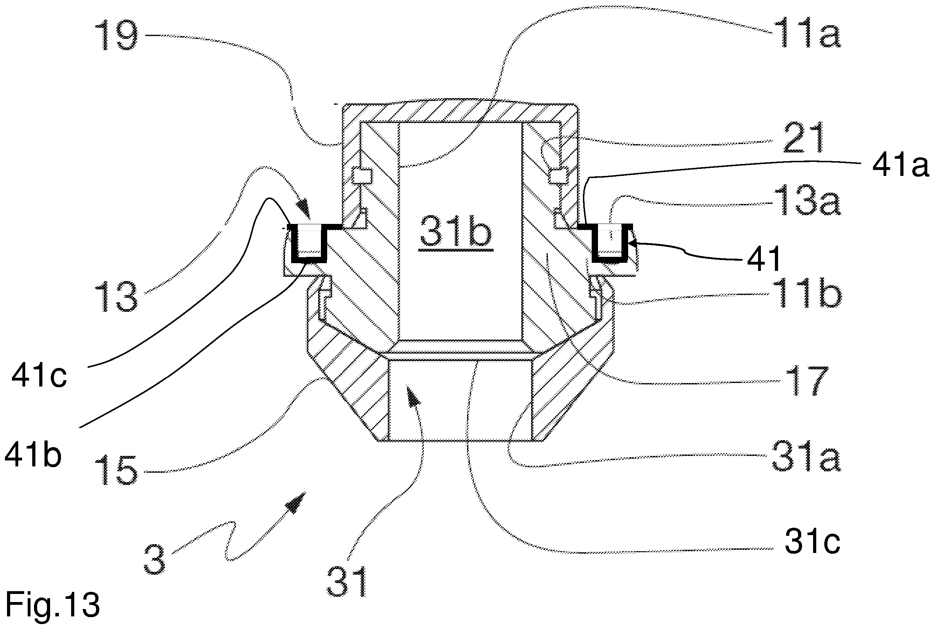

Referring to Fig. 13 there is illustrated a particular embodiment of the invention in which the radial portion 11b provided with engagement means 13 is advantageously covered with a circular ferrule 41 having a central bore 43. The ferrule 41 allows to confer the desired aesthetic appearance to the radial portion 11b of the antitheft device 3. In the embodiment illustrated, the engagement means comprise a continuous annular groove 13a.

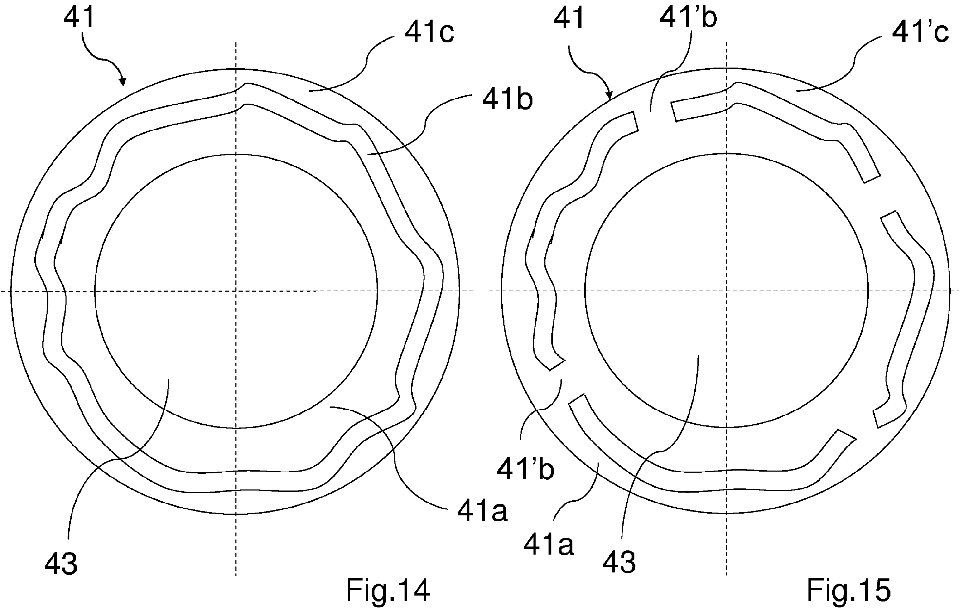

Referring also to Fig. 14, in the case of a continuous groove 13a, the ferrule 41 has a substantially "U"-shaped cross section in which a radial inner portion 41a, a middle portion 41b and a radial outer portion 41c are defined. The middle portion 41b reproduces the shape of the groove 13a. The ferrule 41 when mounted on the radial portion 11b surrounds the bushing 19 without, however, interfering with the free rotation thereof, as the bore 43 has a section enough to allow free rotation of the bushing 19 having for instance a hexagonal shape. According to this embodiment, the ferrule 41 is fitted into the groove 13a with its middle portion 41b. For fixing the ferrule 41 to the portion 11b it is also possible to provide an adhesive.

Referring to Fig. 15, when the engagement means 13 comprise an interrupted annular groove 13a, the ferrule 41 comprises a pair of concentric circular crowns 41'a and 41'c, respectively, which are connected to each other by means of radial connecting elements 41'b. The radial connecting elements 41'b are arranged at the interruptions of the groove 13a.

Advantageously, thanks to the ferrule 41 it is possible to confer the desired aesthetic appearance also to the radial portion 11b of the device 3. The ferrule 41 can indeed be advantageously chrome-plated, varnished or made of plastics.

## Claims

1. Antitheft locking device (3) for vehicle wheels, comprising a cylindrical one-piece body (17) and a blind bushing (19), the cylindrical one-piece body is provided at a first end with a male or female thread, depending on whether the device is made as a nut or as a bolt, respectively, and provided, at a second end opposite to the first end, with an axially extending cylindrical projection (11a) having a circular cross section and is surrounded by the blind bushing (19) comprising a hollow body having a circular inner cross section and a non-circular outer cross section, **characterized in that** said bushing (19) is an idly rotatable bushing rotatably engaged on said cylindrical projection (11a).

2. Device according to claim 1, wherein the hollow body of the bushing (19) comprises an inner part (19a) and an outer part (19b), the outer part (19b) being undetachably fitted by interference on the inner part (19a).

3. Device according to claim 2, wherein the inner part (19a) is made of high resistant steel and the outer part (19b) is made of chrome-plated steel or stainless steel or varnished steel or plastics.

4. Device according to claim 3, wherein the thickness of the wall of the inner part (19a) is significantly greater than the thickness of the wall of the outer part (19b).

5. Device according to claim 4, wherein the ratio between the thickness of the wall of the inner part (19a) and the thickness of the wall of the outer part (19b) is about 10:1.

6. Device according to any of claims 2 to 5, wherein an adhesive layer is interposed between the inner part (19a) and the outer part (19b).

7. Device according to any of the preceding claims, wherein the outer cross section of the hollow body of the bushing (19) is chosen among hexagonal, square, star-like, trapezoidal, triangular sections.

8. Device according to any of the preceding claims, wherein the body (17) of the device comprises a portion (11b) extending radially in a plane substantially perpendicular to the longitudinal axis of the cylindrical body (17) of the device and provided with engagement means (13) for a complementary wrench (9) by means of which the device can be rotated.

9. Device according to claim 8, wherein the radial portion (11b) of the device is covered with a circular ferrule (41).

10. Device according to claim 9, wherein the ferrule (41) comprises a thin metal washer and allows to confer the desired aesthetic appearance to the radial portion (11b) of the antitheft device.

11. Device according to claim 9 or 10, wherein the engagement means (13) comprise a continuous annular groove (13a) and wherein the ferrule (41) comprises a "U"-shaped cross section and a middle portion (41b) reproducing the shape of the groove (13a).

12. Device according to claim 11, wherein the ferrule (41) is positioned on the radial portion (11b) and is fitted with its middle portion (41b) in the groove (13a).

13. Device according to claim 9, wherein the ferrule (41) is glued to the radial portion (11b).

14. Device according to claim 9, wherein the engagement means (13) comprise an interrupted annual groove (13a) and wherein the ferrule (41) comprises a pair of concentric circular crowns (41'a,41'b) connected to each other by means of radial connecting elements (41'c) arranged at the interruptions of the groove (13a).

15. Device according to any of claims 9 to 14, wherein the ferrule (41) is chrome-plated, varnished or made of plastics.

## Patentansprüche

1. Diebstahlsicherungsvorrichtung (3) für Fahrzeugräder, die einen zylindrischen einstückigen Körper (17) und eine Abdeckhülse (19) aufweist, wobei der zylindrische einstückige Körper an einem ersten Ende mit einem Innengewinde oder einem Außengewinde versehen ist, abhängig davon, ob die Vorrichtung als eine Mutter oder ein Gewindestift ausgeführt ist, und an einem zweiten, dem ersten entgegengesetzten Ende mit einem sich axial erstreckenden zylindrischen Vorsprung (11a) versehen ist, der einen kreisförmigen Querschnitt hat und von der Abdeckhülse (19) umgeben ist, die einen Hohlkörper bildet, der einen kreisförmigen Innenquerschnitt und einen nicht kreisförmigen Außenquerschnitt hat, **dadurch gekennzeichnet, dass** die Hülse (19) eine frei drehbare Hülse ist, die drehbar an dem zylindrischen Vorsprung (11a) gehalten ist.

2. Vorrichtung nach Anspruch 1, wobei der Hohlkörper der Hülse (19) ein Innenteil (19a) und ein Außenteil (19b) aufweist, wobei das Außenteil (19b) unlösbar durch eine Pressverbindung mit dem Innenteil (19a) verbunden ist.

3. Vorrichtung nach Anspruch 2, wobei das Innenteil (19a) aus hochwiderstandsfähigem Stahl und das Außenteil (19b) aus chromplattiertem Stahl oder rostfreiem Stahl oder lackiertem Stahl oder Plastik ist.

4. Vorrichtung nach Anspruch 3, wobei die Dicke der Wand des Innenteils (19a) wesentlich größer als die Dicke der Wand des Außenteils (19b) ist.

5. Vorrichtung nach Anspruch 4, wobei das Verhältnis zwischen der Dicke der Wand des Innenteils (19a) und der Dicke der Wand des Außenteils (19b) etwa 10 zu 1 ist.

6. Vorrichtung nach einem der Ansprüche 2 bis 5, wobei eine klebende Schicht zwischen dem Innenteil (19a) und dem Außenteil (19b) angeordnet ist.

7. Vorrichtung nach einem der vorstehenden Ansprüche, wobei der äußere Querschnitt des Hohlkörpers der Hülse (19) ausgewählt ist aus hexagonalen, quadratischen, sternförmigen, trapeziodalen und dreieckigen Querschnitten.

8. Vorrichtung nach einem der vorstehenden Ansprüche, wobei der Körper (17) der Vorrichtung einen Abschnitt (11b) aufweist, der sich radial in einer Ebene erstreckt, die im Wesentlichen senkrecht zu der Längsachse des zylindrischen Körpers (17) der Vorrichtung ist, und mit Eingriffsmitteln (13) für einen passenden Schraubenschlüssel (9) versehen ist, mit dem die Vorrichtung gedreht werden kann.

9. Vorrichtung nach Anspruch 8, wobei der radiale Teil (11b) der Vorrichtung mit einem kreisrunden Ring (41) bedeckt ist.

10. Vorrichtung nach Anspruch 9, wobei der Ring (41) eine dünne Metallscheibe bildet und es ermöglicht, dem radialen Teil (11b) der Diebstahlsicherungsvorrichtung das gewünschte ästhetische Erscheinungsbild zu verleihen.

11. Vorrichtung nach Anspruch 9 oder 10, wobei die Eingriffsmittel (13) eine durchgehende Ringnut (13a) aufweisen und wobei der Ring (41) einen U-förmigen Querschnitt sowie einen mittleren Teil (41b), der die Form der Nut (13a) widergibt, aufweist.

12. Vorrichtung nach Anspruch 11, wobei der Ring (41) an dem radialen Teil (11b), angeordnet ist und mit seinem mittleren Teil (41b) in die Nut (13a) eingepasst ist.

13. Vorrichtung nach Anspruch 9, wobei der Ring (41) mit dem radialen Teil (11b) verklebt ist.

14. Vorrichtung nach Anspruch 9, wobei die Eingriffsmittel (13) eine unterbrochene Ringnut (13a) aufweisen und wobei der Ring (41) ein Paar konzentrischer kreisförmiger Kronen (41'a, 41'b) aufweist, die miteinander mittels radialer Verbindungselemente (41'c) verbunden sind, die an den Unterbrechungen der Nut (13a) angeordnet sind.

15. Vorrichtung nach einem der Ansprüche 9 bis 14, wobei der Ring (41) chromplattiert, lackiert oder aus Plastik ist.

## Revendications

1. Dispositif de verrouillage antivol (3) pour des roues de véhicule, comprenant un corps en une pièce cylindrique (17) et une douille borgne (19), le corps en une pièce cylindrique étant muni à une première extrémité d'un filet mâle ou femelle, selon que le dispositif est constitué sous la forme d'un écrou ou sous la forme d'un boulon, respectivement, et muni, à une seconde extrémité opposée à la première extrémité, d'une saillie cylindrique en extension axiale (11a) ayant une section transversale circulaire et étant entouré par la douille borgne (19) comprenant un corps creux ayant une section transversale interne circulaire et une section transversale externe non circulaire, **caractérisé en ce que** ladite douille (19) est une douille à rotation libre engagée en rotation sur ladite saillie cylindrique (11a).

2. Dispositif selon la revendication 1, dans lequel le corps creux de la douille (19) comprend une partie interne (19a) et une partie externe (19b), la partie externe (19b) étant ajustée de façon non détachable par serrage sur la partie interne (19a).

3. Dispositif selon la revendication 2, dans lequel la partie interne (19a) est constituée d'acier haute résistance et la partie externe (19b) est constituée d'acier plaqué de chrome ou d'acier inoxydable ou d'acier vernis ou de plastique.

4. Dispositif selon la revendication 3, dans lequel l'épaisseur de la paroi de la partie interne (19a) est significativement plus grande que l'épaisseur de la paroi de la partie externe (19b).

5. Dispositif selon la revendication 4, dans lequel le rapport entre l'épaisseur de la paroi de la partie interne (19a) et l'épaisseur de la paroi de la partie externe (19b) est d'environ 10:1.

6. Dispositif selon l'une quelconque des revendications 2 à 5, dans lequel une couche adhésive est interposée entre la partie interne (19a) et la partie externe (19b) .

7. Dispositif selon l'une quelconque des revendications précédentes, dans lequel la section transversale externe du corps creux de la douille (19) est choisie parmi des sections hexagonale, carrée, en étoile, trapézoïdale, triangulaire.

8. Dispositif selon l'une quelconque des revendications précédentes, dans lequel le corps (17) du dispositif comprend une portion (11b) s'étendant radialement dans un plan sensiblement perpendiculaire à l'axe longitudinal du corps cylindrique (17) du dispositif et munie de moyens d'engagement (13) pour une clé (9) complémentaire au moyen de laquelle le dispositif peut être amené à tourner.

9. Dispositif selon la revendication 8, dans lequel la portion radiale (11b) du dispositif est couverte d'une virole (41) circulaire.

10. Dispositif selon la revendication 9, dans lequel la virole (41) comprend une rondelle en métal mince et permet de conférer l'aspect esthétique souhaité à la portion radiale (11b) du dispositif antivol.

11. Dispositif selon la revendication 9 ou 10, dans lequel les moyens d'engagement (13) comprennent une rainure annulaire (13a) continue et dans lequel la virole (41) comprend une section transversale en forme de « U » et une portion médiane (41b) reproduisant la forme de la rainure (13a).

12. Dispositif selon la revendication 11, dans lequel la virole (41) est positionnée sur la portion radiale (11b) et est ajustée avec sa portion médiane (41b) dans la rainure (13a).

13. Dispositif selon la revendication 9, dans lequel la virole (41) est collée à la portion radiale (11b).

14. Dispositif selon la revendication 9, dans lequel les moyens d'engagement (13) comprennent une rainure annulaire interrompue (13a) et dans lequel la virole (41) comprend une paire de couronnes circulaires concentriques (41'a, 41'b) raccordées l'une à l'autre au moyen d'éléments de raccordement radiaux (41'c) agencés au niveau des interruptions de la rainure (13a).

15. Dispositif selon l'une quelconque des revendications 9 à 14, dans lequel la virole (41) est plaquée de chrome, vernie ou constituée de plastique.
